# EUROPÄISCHE PATENTANMELDUNG

(11) **EP 1 596 458 A1**
(43) Veröffentlichungstag der Anmeldung: **16.11.2005**
(21) Anmeldenummer: 05405214.7
(22) Anmeldetag: 01.03.2005
(51) Int. Cl.: H01M 8/12, H01M 4/88, C22C 29/12, C22C 32/00

(54) **Verfahren zur Entwicklung und Herstellung eines Anodenmaterials für eine Hochtemperatur-Brennstoffzelle**

(30) Priorität: 29.03.2004 EP 04405189
(71) Anmelder: Sulzer Hexis AG, 8400 Winterthur (CH)
(72) Erfinder: Robert, Gilles, 8008 Zürich (CH); Kaiser, Andreas Franz-Joseph, 4000 Roskilde (DK); Batawi, Emad, CA 94043 Mountain View (US)
(74) Vertreter: Sulzer Management AG

(57) **Zusammenfassung**

Das Verfahren dient zur Entwicklung und Herstellung eines Anodenmaterials für eine Brennstoffzelle, die bei einer hohen Temperatur über 700°C betreibbar ist. Zur Herstellung wird das Anodenmaterial aus keramischem und metallischem Material zu einem porösen Verbundwerkstoff gesintert. Dieser umfasst eine heterogene Phase mit einem ersten Retikularsystem aus dem keramischen Material und einem zweiten, mit dem ersten verschränkten Retikularsystem aus dem metallischen Material. Mit dem metallischen Material sind eine elektrische Leitung durch den Verbundwerkstoff sowie Redoxprozesse mit den Reaktanden der Brennstoffzelle bewirkbar. Ausserdern umfasst das Verfahren folgende Merkmale a) bis e):
a) Das erste Retikularsystem wird aus grossen und kleinen Keramikpartikeln (10, 11) mit mittleren Durchmessern d₅₀ grösser als 5 µm bzw. kleiner als 1 µm zusammengesetzt.
b) 50 bis 80 Gewichtsprozent des ersten Retikularsystems wird aus den grossen Keramikpartikeln (10) gebildet.
c) Eine zu verwendende Zusammensetzung des Anodenmaterials wird mittels einem an mehreren Proben vorgenommenen Testverfahren ausgewählt, bei dem mit den Redoxprozessen mindestens ein Redoxzyklus bei mindestens der Betriebstemperatur der Brennstoffzelle durchgeführt wird.
d) Bei diesem Testverfahren werden pro Redoxzyklus folgende Messungen und Auswertungen an jeder Probe vorgenommen:
   d1) Bestimmung einer linearen Ausdehnung L₁ der Probe im oxidierten Zustand des zweiten Retikularsystems;
   d2) Bestimmung einer linearen Ausdehnung L₂ für einen neuen oxidierten Zustand, wobei das zweite Retikularsystem zuerst reduziert und nach mindestens einer Stunde wieder oxidiert wird;
   d3) Bestimmung eines spezifischen Werts einer irreversiblen Längenänderung als Verhältnis (L₁ - L₂) : L₁.
e) Die Zusammensetzung des Anodenmaterials wird so ausgewählt, dass die irreversible Längenänderung einen spezifischen Wert kleiner als 0.002, vorzugsweise kleiner als 0.0005, annimmt.

## Beschreibung

Die Erfindung betrifft ein Verfahren zur Entwicklung und Herstellung eines Anodenmaterials für eine Brennstoffzelle, die bei einer hohen Temperatur über 700°C zu betreiben ist, gemäss Oberbegriff von Anspruch 1. Die Erfindung bezieht sich auch auf ein erfindungsgemäss hergestelltes Anodenmaterial sowie auf Brennstoffzellen mit solchem Anodenmaterial. Dabei kann die Anodenschicht auf einer Trägerstruktur aufgebracht sein, wobei insbesondere eine Elektrolytschicht als Träger ausgebildet ist. Oder eine Trägerstruktur für eine dünne Elektrolytschicht ist aus dem Anodenmaterial hergestellt. Im ersten Fall kann statt der Elektrolytschicht auch eine Katodenschicht oder eine schaumartige Metallschicht als Trägerstruktur verwendet werden.

Aus der EP-A- 1 343 215 (= P.7183) ist eine SOFC-Brennstoffzelle mit einer brennstoffseitigen Trägerstruktur bekannt, die ein Anodensubstrat bildet und als Träger für einen dünnschichtigen Elektrolyten sowie eine Katode dient. Im Kontaktbereich zwischen der Anode, die eine dünne Teilschicht der Trägerstruktur ist, und dem Elektrolyten finden an sogenannten Dreiphasenpunkten (Nickel / Festelektrolyt / Gas) elektrochemische Reaktionen statt, bei denen Nickelatome durch Sauerstoffionen (O²⁻) des Elektrolyten oxidiert und diese durch einen gasförmigen Brennstoff (H₂, CO) wieder reduziert werden, wobei H₂O und CO₂ gebildet und die bei der Oxidation freigesetzten Elektronen vom Anodensubstrat weiter geleitet werden. Die EP-A- 1 343 215 beschreibt eine Trägerstruktur, die eine "Redoxstabilität" aufweist und die in Bezug auf diese Redoxstabilität, auf Gasdurchlässigkeit sowie Wirtschaftlichkeit für eine Verwendung in Hochtemperatur-Brennstoffzellen ausreichend gut ausgebildet ist.

Die Trägerstruktur dieser bekannten Brennstoffzelle ist aus einem Elektrodenmaterial aufgebaut und enthält Makroporen, die mittels Porenbildnern erzeugt sind und die kommunizierende Räume bilden. Das Elektrodenmaterial umfasst skelett- oder netzartige, zusammenhängende Gefüge aus durch Sintern verbundenen Partikeln, sogenannte "Retikularsysteme" (auch als perkolierende Phasen bezeichenbar), die zwei ineinander verschränkte Systeme bilden: ein erstes Retikularsystem aus keramischem Material und ein zweites Retikularsystem, das Metalle oder ein Metall - insbesondere Ni - enthält und das eine elektrisch leitende Verbindung durch die Trägerstruktur herstellt. Das Elektrodenmaterial hat die Eigenschaften, dass bei Durchführen von Redoxzyklen mittels Wechsel zwischen oxidierenden und reduzierenden Bedingungen erstens im keramischen Retikularsystem keine wesentlichen Eigenschaftsänderungen auftreten und zweitens im anderen Retikularsystem sich eine Oxidation bzw. Reduktion des Metalls ergibt. Ausserdem bilden die beiden Retikularsysteme zusammen ein dichtes Gefüge, das im oxidierten Zustand Mikroporen enthält, deren Anteil bezogen auf das Volumen des Elektrodenmaterials kleiner als 5 Vol-% ist oder sein kann.

Die beiden Retikularsysteme ergeben sich auf natürliche Weise aus den konstituierenden Partikeln in Form einer statistischen Verteilung der Partikel, wenn diese so präpariert sind, dass die beiden Partikelsorten jeweils ein schmales Grössenspektrum aufweisen, wenn der Anteil für jedes Retikularsystem mindestens rund 30 Vol-% beträgt und wenn die Partikel homogen miteinander vermischt sind. Das durch die Makroporen gebildete System von kommunizierenden Räumen ist ebenfalls ein Retikularsystem. Dieses Hohlraumsystem ergibt die notwendige Gasdurchlässigkeit.

Die beschriebene Trägerstruktur weist zwar die erwünschte Redoxstabilität auf, weist aber in anderer Hinsicht Mängel auf. Während eines Redoxzyklus zieht sich die Struktur beim Übergang vom oxidierten zum reduzierten Zustand zusammen (Konstriktion); die Elektrolytschicht wird entsprechend unter einen kompressiven Druck gesetzt. Der Kompression folgt beim umgekehrten Redox-Übergang eine Expansion. Diese Expansion ist wegen irreversiblen Prozessen in der Trägerstruktur in vielen Anodensubstraten um mehr als 0.1 % grösser als die Kompression. In der Elektrolytschicht, die eine gastrennende Membran darstellt, entstehen wegen der Expansion Risse, wodurch die notwendige Gasdichtheit verloren geht.

Aufgabe der Erfindung ist es, ein Verfahren zur Entwicklung und Herstellung eines Anodenmaterials für eine Hochtemperatur-Brennstoffzelle zu schaffen, wobei das Anodenmaterial sich für eine Paarung mit einer Elektrolytschicht eignet, bei der sowohl eine Verbindung zwischen den verschiedenen Werkstoffen ausreichend beständig ist als auch die Gasdichtheit der Elektrolytschicht gegeben ist. Diese Aufgabe wird durch das im Anspruch 1 definierte Verfahren gelöst.

Das Verfahren dient zur Entwicklung und Herstellung eines Anodenmaterials für eine Brennstoffzelle, die bei einer hohen Temperatur über 700°C betreibbar ist. Zur Herstellung wird das Anodenmaterial aus keramischem und metallischem Material zu einem porösen Verbundwerkstoff gesintert. Dieser umfasst eine heterogene Phase mit einem ersten Retikularsystem aus dem keramischen Material und einem zweiten, mit dem ersten verschränkten Retikularsystem aus dem metallischen Material. Mit dem metallischen Material sind eine elektrische Leitung durch den Verbundwerkstoff sowie Redoxprozesse mit den Reaktanden der Brennstoffzelle bewirkbar. Ausserdem umfasst das Verfahren folgende Merkmale a) bis e):
a) Das erste Retikularsystem wird aus grossen und kleinen Keramikpartikeln mit mittleren Durchmessern d₅₀ grösser als 5 µm bzw. kleiner als 1 µm zusammengesetzt.
b) 50 bis 80 Gewichtsprozent des ersten Retikularsystems wird aus den grossen Keramikpartikeln gebildet.
c) Eine zu verwendende Zusammensetzung des Anodenmaterials wird mittels einem an mehreren Proben vorgenommenen Testverfahren ausgewählt, bei dem mit den Redoxprozessen mindestens ein Redoxzyklus bei mindestens der Betriebstemperatur der Brennstoffzelle durchgeführt wird.
d) Bei diesem Testverfahren werden pro Redoxzyklus folgende Messungen und Auswertungen an jeder Probe vorgenommen:
   d1) Bestimmung einer linearen Ausdehnung L₁ der Probe im oxidierten Zustand des zweiten Retikularsystems;
   d2) Bestimmung einer linearen Ausdehnung L₂ für einen neuen oxidierten Zustand, wobei das zweite Retikularsystem zuerst reduziert und nach mindestens einer Stunde wieder oxidiert wird;
   d3) Bestimmung eines spezifischen Werts einer irreversiblen Längenänderung als Verhältnis (L₁ - L₂): L₁.
e) Die Zusammensetzung des Anodenmaterials wird so ausgewählt, dass die irreversible Längenänderung einen spezifischen Wert kleiner als 0.002, vorzugsweise kleiner als 0.0005, annimmt.

Der abhängige Anspruch 2 betrifft eine vorteilhafte Ausführungsform des erfindungsgemässen Verfahrens. Die Ansprüche 3 bis 5 betreffen das erfindungsgemäss hergestellte Anodenmaterial. Brennstoffzellen mit solchem Anodenmaterial sind jeweils Gegenstand der Ansprüche 6 bis 10.

Für Hochtemperatur-Brennstoffzellen, bei denen beispielsweise die Elektrolytschicht als Träger ausgebildet ist und die Anodenschicht auf diesem Träger aufgebracht ist, lässt sich das erfindungsgemässe Anodenmaterial ebenfalls mit Vorteil verwenden (Anspruch 10). Die besondere Struktur dieses Materials bildet ein wirksames Mittel gegen das Auftreten von zu grossen Scherkräften, die aufgrund des Volumenunterschieds von reduziertem und oxidiertem Zustand des Anodenmaterials an der Grenzfläche zwischen der Anoden- und der Elektrolytschicht entstehen und die ein Delaminieren verursachen können.

Nachfolgend wird die Erfindung anhand der Zeichnungen erläutert. Es zeigen:
- Fig. 1: eine Brennstoffzelle in schematischer Darstellung,
- Fig. 2: eine Veranschaulichung eines als "Klettenkorpuskel" bezeichneten Gebildes, das in einem erfindungsgemässen Anodenmaterial für günstige Struktureigenschaften sorgt,
- Fig. 3: eine Illustration zum Begriff "Klettenhaftverbund" und
- Fig. 4: ein Diagramm zur Konstriktion und Expansion einer Probe während eines Redoxzyklus.

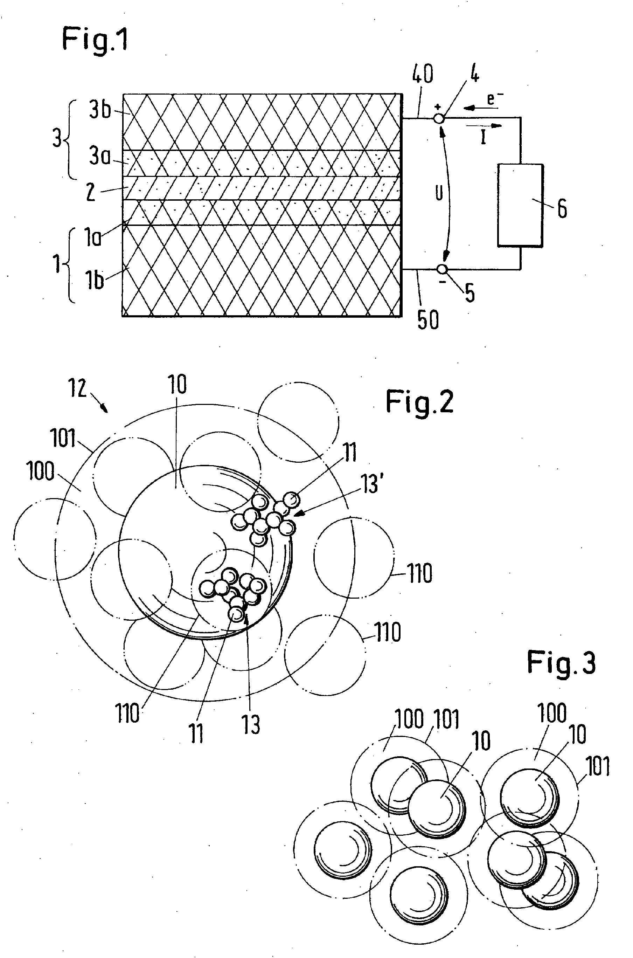

In einer Hochtemperatur-Brennstoffzelle, wie sie in Fig. 1 schematisch dargestellt ist, werden Elektrodenreaktionen zur Erzeugung eines elektrischen Stroms I durchgeführt: nämlich reduzierende Reaktionen in einer Anodenschicht 1a, die Teil einer Trägerstruktur 1 ist; und oxidierende Reaktionen auf einer Katode 3, die aus einer elektrochemisch aktiven Elektrodenschicht 3a und einer zweiten Teilschicht 3b aufgebaut ist. Ein grösserer Teil 1b der Trägerstruktur 1 ist durch poröse, gasdurchlässige Retikularsysteme gebildet. In der Anodenschicht 1a entstehen aus Wasserstoff und Kohlenmonoxid, die den gasförmigen Brennstoff bilden, Wasser bzw. Kohlendioxid. Auf der Katode 3 reagiert molekularer Sauerstoff eines zweiten Gasstroms (z. B. Luft) zu ionischem Sauerstoff O²⁻- unter Aufnahme von Elektronen e- aus einem metallischen Leiter 40, der eine Verbindung zu einem Pol 4 herstellt. Die Sauerstoffionen bewegen sich durch einen Feststoffelektrolyten 2, der eine dünne, gasdicht gesinterte Elektrolytschicht bildet. Diese trennt die beiden Elektrodenschichten 1a und 3a gasdicht; sie ist bei Temperaturen über 700 °C für die Sauerstoffionen leitend. Es erfolgt die reduzierende Anodenreaktion mit den Sauerstoffionen unter Abgabe von Elektronen an einen weiteren metallischen Leiter 50, der eine Verbindung zu einem Pol 5 herstellt.

Zwischen den Polen 4 und 5 ist ein Verbraucher 6 angeordnet, der die Brennstoffzelle mit einem elektrischen Widerstand belastet. Die Spannung U zwischen den Polen 4 und 5 wird in der praktischen Anwendung der Brennstoffzelle durch einen Stapel von in Serie geschalteten Zellen erzeugt.

Die Trägerstruktur 1, für die erfindungsgemässes Anodenmaterial verwendet wird, besteht aus der Anodenschicht 1a und der zweiten Teilschicht 1b. Die Teilschicht 1b umfasst eine heterogene Phase aus Feststoffen und Hohlräume in Form von Makro- sowie Mikroporen. Die Anodenschicht 1a unterscheidet sich von der Teilschicht 1b dadurch, dass sie keine Makroporen enthält. Die Poren ergeben die Gasdurchlässigkeit der Trägerstruktur 1. Die heterogene Phase der Anodenschicht 1a und der Teilschicht 1b enthält zwei Teilphasen, nämlich das erste sowie zweite Retikularsystem, die sich verschränkend durchdringen. Die erste Teilphase - nämlich das erste Retikularsystem - besteht aus einem keramischen Material und die zweite Teilphase - das zweite Retikularsystem - weist Metall auf, für das ein Redoxzyklus mit einem vollständigen Reduzieren und erneuten Oxidieren durchführbar ist. Die zweite Teilphase stellt, wenn das Metall in reduzierter Form vorliegt, eine elektrisch leitende Verbindung durch die Trägerstruktur 1 her.

Die erste Teilphase setzt sich aus grossen und kleinen Keramikpartikeln 10 bzw. 11 zusammen, aus denen inselartig in der heterogenen Phase angeordnet formstabile "Klettenkorpuskeln" 12 und 13 gebildet sind: siehe Fig. 2. Die grossen Keramikpartikel 10 haben mittlere Durchmesser d₅₀ grösser als 5 oder 10 µm; vorzugsweise ist dieser Durchmesser rund 20 µm. Für die kleinen Keramikpartikel 11 ist der mittlere Durchmesser d₅₀ kleiner als 1 µm.

Die zweite Teilphase bildet zusammen mit den kleinen Keramikpartikeln 11 der ersten Teilphase eine angenähert homogene Matrix. In dieser Matrix sind die grossen Keramikpartikel 10 gleichmässig verteilt eingebettet. Die Teilchendichte der kleinen Keramikpartikel 11 ist derart gewählt, dass Cluster von jeweils einer Vielzahl von Partikeln 11 auftreten. Beim Sintern der Trägerstruktur verbinden sich die Partikel 11 in den Clustern zu formstabilen Gebilden 13 oder 13'. Beim Sintern fügen sich überdies die einen dieser Gebilde, die Gebilde 13', mit den grossen Keramikpartikeln 10 zu "grossen Klettenkorpuskeln" 12 zusammen. Ein solches grosses Klettenkorpuskel 12 besteht aus einem Rumpf, der aus einem grossen Keramikpartikel 10 besteht, und einem Hof 100, in dem sich die angefügten Gebilde 13' befinden. Die mittlere Ausdehnung des Hofes 100 ist durch die strichpunktiert gezeichnete Kugel 101 in Fig. 2 angegeben. Je grösser die Teilchendichte der kleinen Keramikpartikel 11 gewählt ist, desto grösser ist der Durchmesser der Kugel 101. Dieser Durchmesser hängt auch von der Grösse der kleinen Keramikpartikeln 11 ab. Er hängt also von der Teilchendichte der kleinen Keramikpartikeln 11 sowie von den Durchmessern der grossen und kleinen Keramikpartikeln 10 bzw. 11 ab.

Ausser dem Klettenkorpuskel 12 sind in Fig. 2 auch kleine Kugeln 110 strichpunktiert eingezeichnet. Diese Kugeln sind den Gebilden 13 zugeordnet, die mit den grossen Keramikpartikeln 10 nicht verbunden sind. Die Durchmesser der Kugeln 110 wachsen ebenfalls mit zunehmender Teilchendichte der kleinen Keramikpartikel 11. Übersteigt diese Teilchendichte eine kritische Grösse, so verbinden sich die kleinen Keramikpartikel 11 zu einer perkolierenden Phase, in der sich die Kugeln 110 zu einem einzigen Verbund vereinigt haben. Die Teilchendichte der kleinen Keramikpartikel 11 sowie deren Grösse werden so gewählt, dass die Kugeln 110 markant kleinere Durchmesser als die Kugeln 101 aufweisen. Die zugeordneten Gebilde 13, die sich innerhalb der oben genannten Matrix befinden, werden nachfolgend als "kleine Klettenkorpuskeln" 13 bezeichnet.

Die Mengenanteile der Keramikpartikel werden derart gewählt, dass die Klettenkorpuskeln 12, 13 sich zu einem "Klettenhaftverbund" assoziieren, durch den die Trägerstruktur 1 gegen Formänderungen stabilisiert ist: siehe Fig. 3. Formänderungen können sich beim Reduzieren der zweiten Teilphase ergeben. Bei diesem Prozess, der mit einer Konstriktion verbunden ist, werden die Partikel, die anfänglich aus dem Metalloxid bestehen, beweglich. Sie ordnen sich neu an, wobei die makroskopische Form der Trägerstruktur 1 sich verändern kann. Eine solche Formänderung wird durch die Stabilisierung stark eingeschränkt. Diese ergibt sich durch ein Verhaken der Gebilde 13' in den Höfen 100, wenn die grossen Klettenkorpuskeln 12 so dicht angeordnet sind, dass Höfe 100 benachbarter Klettenkorpuskeln 12 sich überlappen. Die kleinen Klettenkorpuskeln 13 tragen ebenfalls durch ein Verhaken zur Haftung zwischen den grossen Klettenkorpuskeln 12 bei. Beim Reduzieren der zweiten Teilphase kann sich die Trägerstruktur dank des Klettenhaftverbunds nur sehr beschränkt zusammen ziehen. Die Klettenkorpuskel 12 und 13, die sich aufgrund von Verhakungen assoziieren, bilden einen Verbund, den Klettenhaftverbund, der bezüglich kleinen Dehnungen sehr flexibel ist und nur geringe Spannungen entstehen lässt. Die Elektrolytschicht, die relativ starr ist, wird daher durch die Trägerstruktur 1, in der die zweite Teilphase ein fluidartiges Verhalten während des Konstriktionsprozesses zeigt, nur mit schwachen Zugkräften beansprucht.

Auch beim Oxidieren wird die Trägerstruktur 1 durch den Klettenhaftverbund entsprechend stabilisiert. Durch diese Stabilisierung bleiben die metrischen Eigenschaften der Trägerstruktur 1 an der Grenzfläche zur Elektrolytschicht 2 weitgehend erhalten. Volumenänderungen der zweiten Teilphase während des Redoxzyklus lassen daher die Gasdichtheit der Elektrolytschicht unversehrt, so dass der Wirkungsgrad der Brennstoffzelle erhalten bleibt; oder die Gasdichtheit wird nur so weit beeinträchtigt, dass beim Wirkungsgrad eine tolerierbare Einbusse resultiert.

Zwischen der Anoden- und der Elektolytschicht entstehen auch Scherkräfte, wenn der Oxidationszustand des Anodenmaterials sich ändert. Aufgrund des Klettenhaftverbunds sind diese Scherkräfte relativ schwach. Im Fall, dass die Anodenschicht auf einer als Träger verwendeten Elektolytschicht aufgebracht ist, reichen solche Scherkräfte in der Regel nicht aus, eine Delaminierung der Anodenschicht zu verursachen.

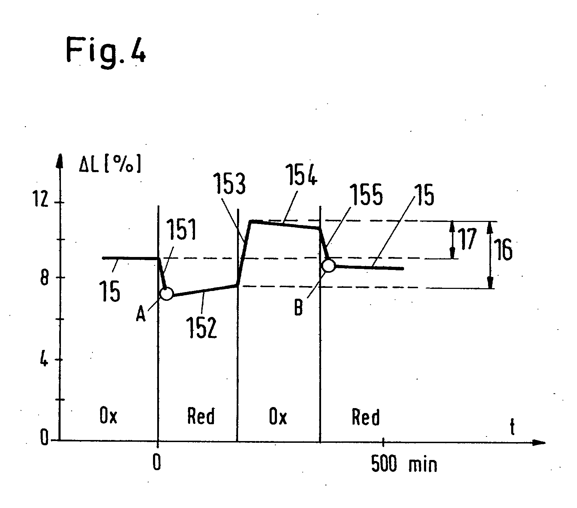

Die Eigenschaft des erfindungsgemässen Anodenmaterials, dass die grossen und kleinen Keramikpartikel 10, 11 formstabile "Klettenkorpuskeln" 12, 13 formen, die zu einem gegen Formänderungen stabilisierenden "Klettenhaftverbund" assoziiert sind, lässt sich anhand der Zusammensetzung nur schwer nachweisen. Dass solche Eigenschaften aber vorliegen, kann indirekt mittels eines Testverfahrens festgestellt werden, das anhand der Fig. 4 erläutert wird:

In Fig. 4 ist gezeigt, wie die lineare Ausdehnung L einer Probe - Kurve 15 - sich während eines Redoxzyklus ändert. Auf der Abszisse ist die Längenänderung ΔL angegeben, die am Anfang den Wert hat, der sich durch die Erwärmung auf die Betriebstemperatur der Brennstoffzelle von 800 °C und bei oxidierenden Bedingungen ergibt (im Ordinatenbereich "Ox"). Bei reduzierenden Bedingungen aufgrund einer Wasserstoffatmosphäre ergibt sich eine Konstriktion mit einer Längenabnahme auf dem Kurvenstück 151 bis zu einem Punkt A (im Ordinatenbereich "Red"). Bei diesem Punkt A ist das Metall der Probe reduziert. Anschliessend - Kurvenstück 152 - nimmt die Länge im reduzierten Zustand wieder etwas zu, wahrscheinlich aufgrund von Relaxationsvorgängen, bei denen elastische Spannungen abgebaut werden. Wird der Wasserstoff durch Luft ersetzt, so nimmt durch die Oxidation die lineare Ausdehnung L wieder zu (Kurvenstück 153) und zwar mehr, als zuvor bei der Reduktion die Länge abgenommen hat. Im oxidierten Zustand ergibt sich wieder eine kleine Längenänderung, möglicherweise auch aufgrund von Relaxationsphänomenen: Kurvenstück 154. Bei erneutem Reduzieren verkürzt sich die lineare Ausdehnung L wieder: Kurvenstück 155, Punkt B. Mit dem Punkt B ist der beim Punkt A begonnene Redoxzyklus abgeschlossen. Die beiden Punkte A und B müssten auf der gleichen Höhe liegen, falls während des Redoxzyklus nur reversible Prozesse auftreten würden. Wie in Fig. 4 ersichtlich ist, liegt eine irreversible Verlängerung vor.

Die aufgrund der Oxidation entstandenen Verlängerungen sind in Fig. 4 mit den Doppelpfeilen 16 und 17 dargestellt. Der Doppelpfeil 17 bezieht sich auf die irreversible Verlängerung, die mit einem Redoxzyklus verbunden ist. Für ein geeignetes Anodensubstrat muss die irreversible Verlängerung 17 möglichst klein sein. Dieses Erfordernis ist ein zweckmässiges Kriterium bei der Suche nach geeigneten Zusammensetzungen. Eine Suche mit diesem Auswahlkriterium ist mit einer Vielzahl von Proben durchgeführt worden.

Das Anodensubstrat, das aus der heterogenen Phase 1b besteht, enthält in der ersten Teilphase mit Y stabilisiertes Zirkoniumoxid YSZ und in der zweiten Teilphase Ni als Metall. Die zweite Teilphase besteht, wenn das Metall in oxidierter Form vorliegt, ganz oder weitgehend aus durch Sintern zusammengefügten NiO-Partikeln. Die Matrix zwischen den grossen Keramikpartikeln 10 hat bezüglich den NiO-Partikeln und kleinen Keramikpartikeln 11 eine heterogene Kornstruktur. Für untersuchte Proben, deren Zusammensetzungen sich als vorteilhaft erwiesen haben, ist das Korngrössenverhältnis der heterogenen Kornstruktur im Bereich zwischen 2:1 und 5:1; die NiO-Partikel haben dabei eine mittlere Korngrösse d₅₀ im Bereich von 0.5 bis 2 µm. Das Mengenverhältnis zwischen der ersten und der zweiten Teilphase liegt - in Gewichtsprozenten - im Bereich von 50:50 bis 25:75, vorzugsweise bei rund 40:60.

Bei einer besonders vorteilhaften Probe ist die Länge des Doppelpfeils 17 im Diagramm der Fig. 4 praktisch verschwunden. Diese Probe ist durch folgende Parameter charakterisiert: 60 Gew-% und d₅₀ = 0.74 µm für NiO; 40 Gew-% und d₅₀ = 0.2 bzw. 20 µm für YSZ mit zwei Teilen grobem YSZ und einem Teil feinem YSZ.

Das Testverfahren, das zur Charakterisierung des erfindungsgemässen Anodenmaterials herangezogen wird, lässt sich folgendermassen zusammenfassen:
- Das Testverfahren wird bei einer Temperatur durchgeführt, die mindestens gleich der Betriebstemperatur (beispielsweise 900°C) der Brennstoffzelle ist.
- Eine lineare Ausdehnung der Probe wird im oxidierten Zustand des zweiten Retikularsystems gemessen und ein Wert L₁ bestimmt. (Der Wert L₁ lässt sich angenähert als eine konstante Grösse ansehen.)
- Das zweite Retikularsystem wird reduziert und nach mindestens einer Stunde wieder oxidiert.
- Für den neuen oxidierten Zustand wird ein Wert L₂ der linearen Ausdehnung (ebenfalls angenähert konstant) bestimmt;
- Als spezifischen Wert der irreversiblen Längenänderung erhält man das Verhältnis (L₁ - L₂)/L₁; erfindungsgemäss muss dieser spezifische Wert kleiner als 0.002, vorzugsweise kleiner als 0.0005 sein.

Beim Testverfahren werden vorteilhafterweise eine Vielzahl von Redoxzyklen durchgeführt. Dabei beträgt die Anzahl der Redoxzyklen mindestens fünf; vorzugsweise ist sie um eine Grössenordnung, d.h. um rund den Faktor 10, grösser.

Ausserhalb der Anodenschicht 1a sind die Mikro- und Makroporen der Trägerstruktur 1 gleichmässig verteilt. Für die Makroporen beträgt der Volumenanteil 15 - 35, vorzugsweise mehr als 20 Vol-%; für die Mikroporen beträgt er vorzugsweise weniger als 10 Vol-%. Die mittleren Durchmesser der Makroporen haben Werte zwischen 3 und 25 µm, während jene der Mikroporen Werte zwischen 1 und 3 µm aufweisen. Die Trägerstruktur 1 hat eine Schichtdicke von 0.3 bis 2 mm, vorzugsweise 0.6 bis 1 mm. Die Dicke der Elektrolytschicht ist kleiner als 30 µm, vorzugsweise kleiner als 15 µm.

Bei einem Verfahren zum Herstellen der erfindungsgemässen Brennstoffzelle wird bei der Erzeugung eines Rohlings für die Trägerstruktur 1 das Metall der zweiten Teilphase in oxidierter Form verwendet. Das Material für den Festelektrolyten wird beispielsweise als Schlicker mittels einem Dünnschichtverfahren auf den genannten Rohling aufgebracht. Danach wird der beschichtete Rohling gesintert. Zur Erzeugung der Trägerstruktur 1 ist beispielsweise eines der folgenden Teilverfahren anwendbar: Foliengiessen, Rollpressen, Nasspressen oder isostatisches Pressen. Der Dünnschichtelektrolyt kann mittels anderer Verfahren aufgebracht werden: Siebdruck, Aufsprühen oder Giessen von Schlicker, Schlickerguss imVakuum ("vacuum slip casting") oder reaktives Aufspritzen.

Wie bereits erwähnt, lässt sich das erfindungsgemässe Anodenmaterial auch mit Vorteil in einer Brennstoffzelle verwenden, in der beispielsweise die Feststoff-Elektrolytschicht als Träger für Elektrodenschichten ausgebildet ist. Die Elektrolytschicht trennt dabei die Anoden- von einer Katodenschicht gasdicht. Die auf der Brennstoffseite aufgebrachte Anodenschicht umfasst die heterogene Phase mit den beiden Retikularsystemen. Durch die Stabilisierung der heterogenen Phase bleiben die metrischen Eigenschaften der Anodenschicht an der Grenzfläche zur Elektrolytschicht weitgehend erhalten, so dass nur schwache Scherkräfte entstehen, die kein Delaminieren der Anodenschicht verursachen. Statt der Elektrolytschicht kann auch die Katodenschicht oder eine schaumartige Metallschicht eine Trägerstruktur bilden.

## Patentansprüche

1. Verfahren zur Entwicklung und Herstellung eines Anodenmaterials für eine Brennstoffzelle, die bei einer hohen Temperatur über 700°C betreibbar ist, wobei zur Herstellung das Anodenmaterial aus keramischem und metallischem Material zu einem porösen Verbundwerkstoff gesintert wird, der eine heterogene Phase umfasst mit einem ersten Retikularsystem aus dem keramischen Material und einem zweiten, mit dem ersten verschränkten Retikularsystem aus dem metallischen Material, und wobei mit dem metallischen Material eine elektrische Leitung durch den Verbundwerkstoff sowie Redoxprozesse mit den Reaktanden der Brennstoffzelle bewirkbar sind, **dadurch**
**gekennzeichnet, dass**
a) das erste Retikularsystem aus grossen und kleinen Keramikpartikeln (10, 11) mit mittleren Durchmessern d₅₀ grösser als 5 µm bzw. kleiner als 1 µm zusammengesetzt wird,
b) 50 bis 80 Gewichtsprozent des ersten Retikularsystems aus den grossen Keramikpartikeln (10) gebildet wird,
c) eine zu verwendende Zusammensetzung des Anodenmaterials mittels einem an mehreren Proben vorgenommenen Testverfahren ausgewählt wird, bei dem mit den Redoxprozessen mindestens ein Redoxzyklus bei mindestens der Betriebstemperatur der Brennstoffzelle durchgeführt wird,
d) bei diesem Testverfahren pro Redoxzyklus folgende Messungen und Auswertungen an jeder Probe vorgenommen werden:
d1) Bestimmung einer linearen Ausdehnung L₁ der Probe im oxidierten Zustand des zweiten Retikularsystems;
d2) Bestimmung einer linearen Ausdehnung L₂ für einen neuen oxidierten Zustand, wobei das zweite Retikularsystem zuerst reduziert und nach mindestens einer Stunde wieder oxidiert wird;
d3) Bestimmung eines spezifischen Werts einer irreversiblen Längenänderung als Verhältnis (L₁ - L₂) : L₁ ; und schliesslich
e) die Zusammensetzung des Anodenmaterials so ausgewählt wird, dass die irreversible Längenänderung einen spezifischen Wert kleiner als 0.002, vorzugsweise kleiner als 0.0005, annimmt.

2. Verfahren nach Anspruch 1, **dadurch gekennzeichnet, dass** beim Testverfahren eine Vielzahl von Redoxzyklen durchgeführt werden, wobei die Anzahl der Redoxzyklen mindestens fünf beträgt.

3. Anodenmaterial, das gemäss Anspruch 1 oder 2 hergestellt ist, **dadurch gekennzeichnet, dass** das erste Retikularsystem aus mit Y stabilisiertem Zirkoniumoxid YSZ, aus dotiertem Ceroxid, aus einem Perowskit oder einem anderen keramischen Material besteht, und das zweite Retikularsystem Ni als Metall enthält, dem beispielsweise Cu zulegiert ist.

4. Anodenmaterial nach Anspruch 3, **dadurch gekennzeichnet, dass** das zweite Retikularsystem bei Vorliegen der oxidierten Form des Metalls ganz oder weitgehend aus durch Sintern zusammengefügten NiO-Partikeln besteht.

5. Anodenmaterial nach einem der Ansprüche 3 oder 4, **dadurch gekennzeichnet, dass** das Mengenverhältnis zwischen dem ersten und dem zweiten Retikularsystem - in Gewichtsprozenten - im Bereich von 50:50 bis 25:75, vorzugsweise bei rund 40:60 liegt.

6. Hochtemperaturbrennstoffzelle mit einer Anode, deren Material gemäss Anspruch 1 oder 2 hergestellt ist, **dadurch gekennzeichnet, dass** das mit einer Elektrolytschicht in Verbindung stehende Anodenmaterial eine aus den beiden Retikularsystemen zusammengesetzte heterogene Phase bildet, dass die grossen und kleinen Keramikpartikel (10, 11) formstabile "Klettenkorpuskeln" (12, 13) formen, die inselartig in der heterogenen Phase dispergiert sind, dass die "Klettenkorpuskeln" zu einem "Klettenhaftverbund" assoziiert sind, durch den die heterogene Phase gegen Formänderungen stabilisiert ist, wobei durch diese Stabilisierung die metrischen Eigenschaften der heterogenen Phase an der Grenzfläche zur Elektrolytschicht weitgehend erhalten bleiben.

7. Brennstoffzelle nach Anspruch 6, **dadurch gekennzeichnet, dass** eine brennstoffseitige, eine Anodenschicht (1a) umfassende Trägerstruktur (1) als Träger für eine dünne, gasdicht gesinterte Feststoff-Elektrolytschicht (2) ausgebildet ist, dass diese Trägerstruktur die heterogene Phase (1b) und durch diese Phase gebildete Hohlräume in Form von Makro- sowie Mikroporen umfasst, dass durch die Stabilisierung der heterogenen Phase die metrischen Eigenschaften der Trägerstruktur an der Grenzfläche zur Elektrolytschicht erhalten bleiben, so dass Volumenänderungen des zweiten Retikularsystems während des Redoxzyklus die Gasdichtheit der Elektrolytschicht unversehrt lassen.

8. Brennstoffzelle nach Anspruch 7, **dadurch gekennzeichnet, dass** die Trägerstruktur (1) eine Schichtdicke von 0.3 bis 2 mm, vorzugsweise 0.6 bis 1 mm aufweist, dass die Dicke der Elektrolytschicht (2) kleiner als 30 µm, vorzugsweise kleiner als 15 µm ist und dass ausserhalb der Anodenschicht die Mikro- und Makroporen der Trägerstruktur gleichmässig verteilt sind, wobei für die Makroporen der Volumenanteil 15 - 35, vorzugsweise mehr als 20 Vol-% beträgt, für die Mikroporen vorzugsweise weniger als 10 Vol-%, und die mittleren Durchmesser der Makroporen Werte zwischen 3 und 25 µm haben, während jene der Mikroporen Werte zwischen 1 und 3 µm aufweisen.

9. Brennstoffzelle nach Anspruch 7 oder 8, **dadurch gekennzeichnet, dass** bei der Erzeugung eines Rohlings für die Trägerstruktur (1), auf welcher der Feststoff-Elektrolytschicht (2) mittels einem Dünnschichtverfahren, beispielsweise mittels Siebdruck schlickerförmig aufgebracht wird, dass dabei das Metall des zweiten Retikularsystems in oxidierter Form verwendet wird und dass der Rohling zusammen mit dem aufgetragenen Elektrolytmaterial gesintert wird;
oder, dass für die Erzeugung der als Träger benutzen Schicht eines der folgenden Teilverfahren angewendet wird: Schlickerguss, Foliengiessen, Rollpressen, Nasspressen oder isostatisches Pressen..

10. Brennstoffzelle nach Anspruch 6, **dadurch gekennzeichnet, dass** eine Feststoff-Elektrolytschicht als Träger für Elektrodenschichten ausgebildet ist und eine Anoden- von einer Katodenschicht gasdicht trennt, oder dass die Katodenschicht oder eine schaumartige Metallschicht eine Trägerstruktur bildet, wobei die auf der Brennstoffseite aufgebrachte Anodenschicht die heterogene Phase mit den beiden Retikularsystemen bildet, dass durch die Stabilisierung der heterogenen Phase die metrischen Eigenschaften der Anodenschicht an der Grenzfläche zur Elektrolytschicht weitgehend erhalten bleiben und so nur schwache Scherkräfte entstehen, die kein Delaminieren der Anodenschicht verursachen.
